# EUROPÄISCHE PATENTSCHRIFT

(11) **EP 0 761 368 B1**
(45) Veröffentlichungstag und Bekanntmachung des Hinweises auf die Patenterteilung: **02.02.2000**
(21) Anmeldenummer: 96110970.9
(22) Anmeldetag: 08.07.1996
(51) Int. Cl.: B23K 11/24, B23K 11/06, B23K 11/25

(54) **Schweissverfahren für beschichtetes Blech, insbesondere Weissblech**
Welding method for coated sheets, especially tin-plated sheets
Procédé de soudage pour tôles revêtues, particulièrement en fer-blanc

(30) Priorität: 09.08.1995 CH 229195
(43) Veröffentlichungstag der Anmeldung: 12.03.1997
(73) Patentinhaber: ELPATRONIC AG, 8962 Bergdietikon (CH)
(72) Erfinder: Baumgartner, Michael, 8436 Rekingen (CH)

(56) Entgegenhaltungen:
- EP-A- 0 547 322
- EP-A- 0 622 148
- GB-A- 2 178 682
- US-A- 3 610 862
- US-A- 4 160 892
- PATENT ABSTRACTS OF JAPAN vol. 005, no. 132 (C-068), 22.August 1981 & JP-A-56 065995 (KAWASAKI STEEL CORP), 4.Juni 1981,

## Beschreibung

Die Erfindung betrifft ein Verfahren zum elektrischen Widerstandsschweissen von mit einer elektrisch leitenden Beschichtung versehenem Blech mittels einer Rollnahtwiderstandsschweissmaschine, insbesonders zum Schweissen von Dosenzargen. Ferner betrifft die Erfindung eine Vorrichtung zur Durchführung des Verfahrens (vgl. US-A-3610862).

Bei zu schweissenden beschichteten Blechen kann die Dicke der elektrisch leitenden Beschichtung einen erheblichen Einfluss auf die Schweissqualität haben. Insbesonders beim Schweissen von Weissblech zu Dosen hat es sich gezeigt, dass die Stärke der Zinnschicht bei den verwendeten sogenannten LTS-Blechen mit geringer Verzinnung relativ stark schwanken kann. So haben Messungen an Rollen (coils) dieses Materials ergeben, dass die Stärke der Zinnschicht entlang der Coilbreite von ca. 900 mm bei 1 g/m² Sollverzinnung bis ca. 3,0 g/m² Zinn schwanken kann. Hohe Werte treten vor allem im Randbereich des Coils auf. Da bei der Bildung einer Ueberlappungsnaht beim Rollnahtschweissen die Zinnschicht viermal zwischen die Schweisselektroden zu liegen kommt, kann sich ein beträchtlicher Einfluss der Zinnschichtdicke auf das Schweissergebnis ergeben, da in der Regel mit konstantgehaltenem Schweissstrom geschweisst wird, der durch entsprechend regelbare bekannte Konstantstromschweissquellen erzeugt wird. Der wechselnde elektrische Widerstand der Ueberlappungsnaht verschieden stark verzinnter Bleche führt dabei zu einer wechselnden Leistungseinbringung in die Schweisszone, was für eine gute Schweissqualität unerwünscht ist. Dies gilt auch bei anderen beschichteten Blechen als Weissblech.

Der Erfindung liegt die Aufgabe zugrunde, ein Schweissverfahren zu schaffen, welches diesen Nachteil nicht aufweist.

Dies wird bei einem Verfahren der eingangs genannten Art dadurch erreicht, dass im Betrieb der Schweissmaschine vor dem Schweissbereich die Beschichtungsdicke des Werkstückes mindestens einseitig bestimmt wird, und dass die Schweissstromquelle der Schweissmaschine während des Schweissvorganges in Abhängigkeit von der ermittelten Beschichtungsdicke beeinflusst wird, um die Leistungseinbringung in den Schweissbereich im wesentlichen konstant zu halten.

Dadurch, dass die Beschichtungsdicke bzw. die vorhandene Menge Beschichtungsmaterial des Bleches bestimmt wird, kann die Schweissstromquelle beim Schweissen des Bleches so beeinflusst werden, dass der Strom beim Schweissen des Bleches entsprechend der Beschichtungsdikke derart variiert wird, dass die eingebrachte Leistung konstant gehalten wird; der Schweissstrom wird also laufend dem aufgrund der Beschichtungsdicke zu erwartenden Kontaktwiderstand angepasst. Höhere Beschichtungsdicke ist dabei in der Regel gleich geringerem Kontaktwiderstand (je nach Beschichtungsmaterial könnten aber auch umgekehrte Verhältnisse herrschen) und erfordert einen höheren Strom, da ansonsten Kaltschweissungen zu erwarten sind. Moderne Schweissstromquellen (z.B. vom Typ UNISOUD der Firma Soudronic, Schweiz) arbeiten derzeit mit konstantem Strom, lassen aber einen rasch ändernden Schweissstrom zu, so dass bei der Schweissung auf die Aenderung der Beschichtungsdicke schnell genug reagiert werden kann.

Ferner liegt der Erfindung die Aufgabe zugrunde, eine Vorrichtung zur Durchführung des Verfahrens zu schaffen. Dies wird mit einer Vorrichtung mit den Merkmalen des Anspruchs 7 erreicht.

Im folgenden werden spezielle Ausführungsbeispiele der Erfindung anhand der Zeichnungen näher erläutert. Dabei zeigt:
Figur 1 grob schematisch die Arbeitsweise gemäss der Erfindung beim Dosenschweissen;
Figur 2 grob schematisch die Darstellung eines Messverfahrens zur Bestimmung der Beschichtungsdicke; und
Figur 3 eine Darstellung des Intensitätsverlaufs der Eigenstrahlung beim Strahlungsmessverfahren.

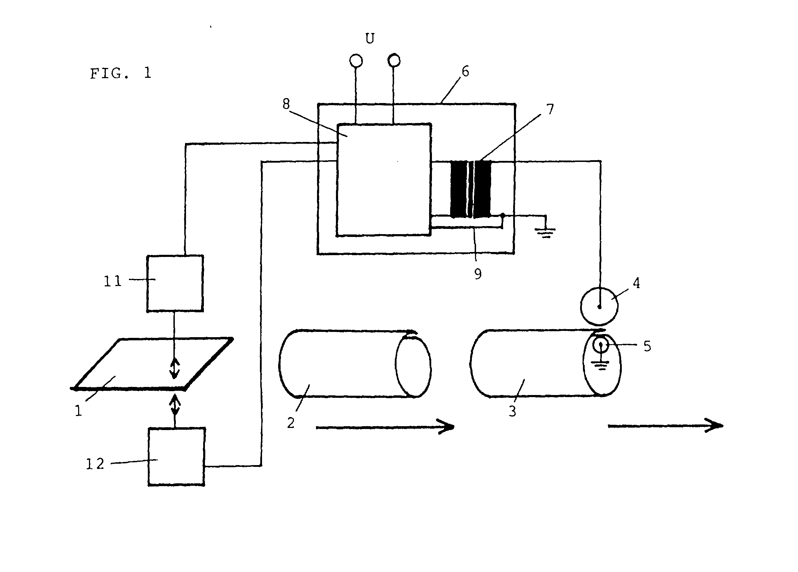

Figur 1 stellt grob schematisch den Ablauf des erfindungsgemässen Verfahrens beim Schweissen von Dosenzargen dar. Beim Schweissen von Dosenzargen wird ein ebener Blechabschnitt 1 in einem Rundapparat zu einer Zarge 2 verformt. Die verformte Zarge, welche in der Regel eine Ueberlappung aufweist, die in einer Rollnahtwiderstandschweissmaschine zu einer Ueberlappungsnaht geschweisst wird, ist in der Figur mit 3 bezeichnet. Zwischen der oberen Elektrode 4 und der unteren Elektrode 5 der Rollnahtwiderstandschweissmaschine wird die Naht geschweisst. In der Regel finden dabei Drahtelektroden Verwendung, welche auf den gezeigten Rollen 4 und 5 ablaufen, welche aber in der Figur nicht dargestellt sind. Der Schweissstrom für die Bildung der Schweissnaht wird von einer Schweissstromquelle 6 bereitgestellt. Diese umfasst einen Schweisstransformator und einen Treiber 8 für den Schweisstransformator, welcher aus der Speisepannung U eine Primärspannung mit einer Frequenz von z.B. 500 Hz für den Schweisstransformator bereitstellt. Ueblicherweise wird dabei über eine Stromrückführung von der Sekundärseite des Transformators 7 zum Treiber 8, der einen entsprechenden Regler enthält, ein konstanter Schweissstrom I bewirkt. Der konstante Schweissstrom I ergibt aber bei einer Beschichtung der Bleche 1 mit einer von Blech zu Blech schwankenden oder innerhalb eines Bleches schwankenden Dicke eine schwankende Leistungseinbringung in den Schweissnahtbereich und damit eine ungleichmässige Schweissqualität. Gemäss der Erfindung wird nun vorgesehen, dass die Beschichtungsdicke der Beschichtung des Bleches 1 im Betrieb gemessen wird und dass der Schweissstrom entsprechend der Beschichtungsdicke variiert wird. Zu diesem Zweck ist in der schematischen Darstellung eine Messeinrichtung 11 dargestellt, welche beim Blech 1 die Schichtdicke der Beschichtung misst. Das entsprechende Resultat wird an die Schweisstromquelle 6 abgegeben, welche den Schweissstrom entsprechend der gemessenen Schichtdicke einstellt, wenn das zugehörige Blech 1 im Bereich der Schweissrollen 4 und 5 angekommen ist. Die Schichtdicke kann dabei nur auf einer Seite des Bleches mit der Messeinrichtung 11 bestimmt werden. Es kann auch eine weitere Messeinrichtung 12 auf der anderen Seite des Bleches vorgesehen sein, um auch dort die Beschichtungsdicke zu messen. Bei den Blechen kann es sich um verschiedenste Arten von beschichteten Blechen handeln. Beim gezeigten Anwendungsfall des Schweissens von Dosenzargen, wird es sich in der Regel um Weissblech handeln, d.h. Stahlblech, welches in der Regel beidseitig mit einer Zinnschicht versehen ist. Die Messung der Schichtdicke erfolgt dabei vorzugsweise in demjenigen Bereich des Bleches, der nach der Rundung zur Dosenzarge den Schweissnahtbereich bildet. Anstelle der Messung am ebenen Blech kann natürlich auch eine Schichtdickenbestimmung beim schon gerundeten Blech erfolgen.

Die Schweissstromquelle 6 wird zur Durchführung des Verfahrens mit mindestens einem Eingang versehen, an welchem das Messresultat der Dickenmesseinrichtung 11 angelegt werden kann. Dieses Resultat wird dann dazu benutzt, den Schweissstrom entsprechend der gemessenen Dicke zu variieren, bzw. der gemessenen Dicke jeweils einen Schweissstromsollwert I zuzuordnen, welcher dann von der Schweissstromquelle eingehalten wird. Sofern eine zweite Dickenmesseinrichtung 12 vorgesehen ist, wird auch deren Signal zur Steuerung herangezogen bzw. dieses Signal wird mit dem Signal der ersten Dickenmesseinrichtung 11 verknüpft. Vorzugsweise erfolgt die Messung der Dicke kontinuierlich oder mit einer Vielzahl von Messpunkten für jedes Blech und die Anpassung des Schweissstromes I erfolgt so rasch, dass Beschichtungsdickenschwankungen innerhalb der selben Dosenzarge bzw. des selben Bleches durch Aenderung des Schweissstromes kompensiert werden können. Der Strom kann aber auch nur für jedes Blech aufgrund einer oder mehrerer Messungen der Schichtdicke an diesem Blech auf einen für den ganzen Schweissvorgang an diesem Blech gültigen Wert festgelegt werden, so dass der Stromwert innerhalb der Schweissnaht nicht geändert wird. Auf diese Weise kann mit Blechen, die innerhalb jedes Bleches eine im wesentlichen gleichmässige Beschichtung besitzen, die aber von Blech zu Blech eine unterschiedliche Beschichtung aufweisen, eine gleichmässige Schweissung erzielt werden. Häufig weisen Bleche aus dem Coil-Randbereich eine grössere Zinndicke auf als Bleche aus der Coil-Mitte. Die Mischung solcher Bleche 1 mit Blechen aus der Coil-Mitte ergibt bei herkömmlicher Schweissung im Bereich der dickeren Zinnschicht Kaltschweissungen, da der Kontaktwiderstand geringer ist. Mit dem Schweissverfahren gemäss den beiden genannten Varianten wird jedes Blech bzw. wird jede Zarge mit dem passenden Strom geschweisst, bzw. dieser Strom wird innerhalb der Zarge variiert, um eine optimale Schweissung zu gewährleisten.

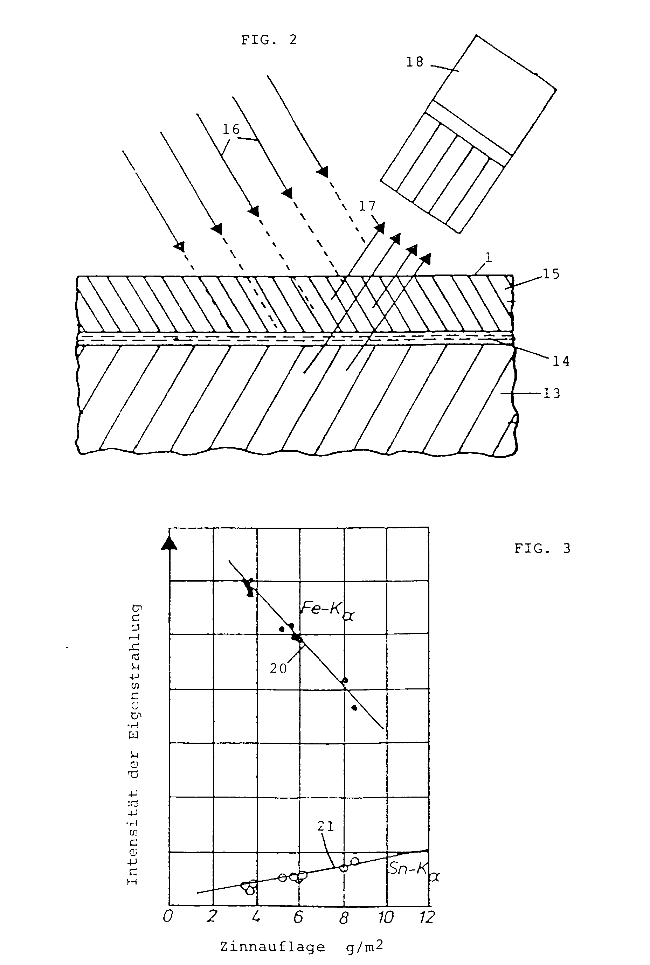

Figur 2 zeigt schematisch ein Beispiel zur Messung der Schichtdicke bei einem Weissblech 1. Dieses ist nur teilweise im Vertikalschnitt dargestellt und besteht aus einem Stahlblech 13, welches mindestens einseitig, aber in der Regel beidseitig mit einer Zinnschicht 15 versehen ist. Zwischen dem Stahlblech und der Zinnschicht ist eine Eisen-Zinn-Zwischenschicht 14 gebildet. Bei der Bestrahlung der Blechoberfläche des Bleches 1 mit energiereichen elektromagnetischen Wellen (Röntgen- oder Gammastrahlen) wird eine Eigenstrahlung des Stahls und der Zinnschicht angeregt. In der Figur 2 ist die Gammastrahlung als Strahlung 16 angedeutet. Die Eigenstrahlung des Stahls und des Zinns wird als Strahlung 17 dargestellt, die von einem Strahlungsempfänger 18 aufgefangen wird und ausgewertet wird. Das Auswerteergebnis wird, wie in Figur 1 gezeigt, an die Schweissstromquelle abgegeben. Solche Messeinrichtungen sind an sich bekannt und werden von den Herstellern beschichteter Bleche auch zur Steuerung und Ueberwachung der Zinnauflage eingesetzt. Zur Messung der Zinnschicht auf Stahl wird meistens die energiereiche Eisen-K-Alphastrahlung als Eigenstrahlung 17 herangezogen, welche durch Schichtdickenschwankungen des Zinns in unterschiedlicher, aber bestimmter Weise geschwächt wird, so dass die Schwächung der Eisen-K-Alphastrahlung durch die Zinnschicht ein Mass für deren Schichtdicke darstellt.

Figur 3 zeigt schematisch in einem Diagramm die Intensität der Eigenstrahlung sowohl für die Eisen-K-Alphastrahlung 20 als auch für die Zinn-K-Alphastrahlung in Abhängigkeit von der Stärke der Zinnauflage auf dem Blech. Es ist daraus ersichtlich, dass durch Messung der Intensität der Eigenstrahlung 20 die Zinnauflage genau bestimmt werden kann.

Anstelle der Messung der Beschichtungsdicke durch ein Strahlungsmesssystem können natürlich auch andere Messverfahren verwendet werden. So kann die Dicke einer Beschichtung über magnetische oder elektrische Parameter des beschichteten Bleches ermittelt werden. Das jeweils geeignete Verfahren kann aus den für die jeweilige Beschichtung geeigneten bekannten Verfahren ausgewählt werden.

## Patentansprüche

1. Verfahren zum elektrischen Widerstandsschweissen von mit einer elektrisch leitenden Beschichtung versehenem Blech (1) mittels einer Rollnahtwiderstandsschweissmaschine, insbesonders zum Nahtschweissen von Dosenzargen, dadurch gekennzeichnet, dass im Betrieb der Schweissmaschine vor dem Schweissbereich die Beschichtungsdicke des Werkstückes mindestens einseitig bestimmt wird, und dass die Schweissstromquelle (6) der Schweissmaschine während des Schweissvorganges in Abhängigkeit von der ermittelten Beschichtungsdicke beeinflusst wird, um die Leistungseinbringung in den Schweissbereich im wesentlichen konstant zu halten.

2. Verfahren nach Anspruch 1, dadurch gekennzeichnet, dass die Beschichtungsdicke im Bereich der vorgesehenen Schweissnaht und vorzugsweise beidseitig des Bleches (1) bestimmt wird.

3. Verfahren nach Anspruch 1 oder 2, dadurch gekennzeichnet, dass Weissblech geschweisst wird, wobei dessen Zinnschichtdicke bestimmt wird.

4. Verfahren nach einem der Ansprüche 1 bis 3, dadurch gekennzeichnet, dass die Beschichtungsdicke durch ein Strahlungsmessverfahren bestimmt wird.

5. Verfahren nach Anspruch 4, dadurch gekennzeichnet, dass die Eigenstrahlung des Grundwerkstoffes bei dessen Bestrahlung mit Gammastrahlen gemessen wird.

6. Verfahren nach einem der Ansprüche 1 bis 3, dadurch gekennzeichnet, dass die Schichtdicke über elektrische und/oder magnetische Parameter bestimmt wird.

7. Vorrichtung mit einer Rollnahtschweissmaschine mit einer steuerbaren Schweissstromquelle (6), zur Durchführung des Verfahrens nach Anspruch 1, gekennzeichnet durch eine Einrichtung zur Ermittlung der Beschichtungsdicke (11,12), und ein Steuer- oder Regelglied (8), das aus dem Ausgangssignal der Einrichtung zur Ermittlung der Beschichtungsdicke ein Steuersignal für die Einstellung des Schweissstromes ableitet.

8. Vorrichtung nach Anspruch 7, dadurch gekennzeichnet, dass die Einrichtung zur Ermittlung der Beschichtungsdicke eine Gammastrahlenquelle und einen Detektor für Alphastrahlung umfasst.

## Claims

1. Method for the electrical resistance welding, by means of a roller seam welding machine, of sheet metal (1) provided with an electrically conductive coating, in particular for seam-welding can bodies, characterized in that the thickness of the coating of the workpiece on at least one side thereof is determined upstream of the welding zone while the welding machine is in operation, and in that the welding current source (6) of the welding machine is biased during the welding operation as a function of the coating thickness detected, in order to keep the power input into the weld zone essentially constant.

2. Method according to Claim 1, characterized in that the thickness of the coating is determined in the region of the intended weld seam, and preferably on both sides of the sheet metal (1).

3. Method according to Claim 1 or Claim 2, characterized in that the material welded is tinplate, and the thickness of its tin layer is determined.

4. Method according to any one of Claims 1 to 3, characterized in that the thickness of the coating is determined by a radiation measurement technique.

5. Method according to Claim 4, characterized in that the characteristic radiation of the substrate material is measured upon irradiation thereof with gamma rays.

6. Method according to any one of Claims 1 to 3, characterized in that the film thickness is determined from electrical and/or magnetic parameters.

7. Apparatus with a roller seam welding machine with a controllable welding current source (6) for carrying out the method according to Claim 1, characterized by a device for detecting the coating thickness (11, 12), and a controlling or regulating element (8) which derives a control signal for the welding current setting from the output signal of the coating thickness detection device.

8. Apparatus according to Claim 7, characterized in that the device for detecting the thickness of the coating comprises a gamma ray source and a detector of alpha radiation.

## Revendications

1. Procédé de soudage électrique par résistance d'une tôle (1) pourvue d'un revêtement électriquement conducteur, au moyen d'une machine à souder par résistance formant un cordon par roulement, notamment pour la formation de cordons de soudure sur des corps de boîte, caractérisé en ce qu'on détermine l'épaisseur du revêtement de la pièce à travailler au moins sur un côté en avant de la zone à souder pendant le fonctionnement de la machine à souder, et en ce que la source de courant du soudage (6) de la machine à souder est influencée pendant le déroulement du soudage en fonction de l'épaisseur de revêtement déterminée, afin de garder l'introduction de puissance dans la zone de soudage essentiellement constante.

2. Procédé selon la revendication 1, caractérisé en ce que l'épaisseur de revêtement est déterminée dans la zone de cordon de soudure prévu et de préférence des deux côtés de la tôle (1).

3. Procédé selon la revendication 1 ou 2, caractérisé en ce qu'on soude de la tôle en fer blanc à l'occasion de quoi on détermine son épaisseur de revêtement d'étain.

4. Procédé selon l'une quelconque des revendications 1 à 3, caractérisé en ce qu'on détermine l'épaisseur de revêtement par un procédé de mesure à rayons.

5. Procédé selon la revendication 4, caractérisé en ce que la radiation propre du matériau de base est mesurée lors de son irradiation aux rayons gamma.

6. Procédé selon l'une quelconque des revendications 1 à 3, caractérisé en ce que l'épaisseur de revêtement est déterminée par des paramètres électriques et/ou magnétiques.

7. Dispositif avec une machine à souder par résistance formant un cordon par roulement avec une source de courant de soudure (6) commandable pour la mise en oeuvre du procédé selon la revendication 1, caractérisé par un appareillage pour la détermination de l'épaisseur de revêtement (11,12) et par un organe de commande ou de régulation (8) qui dérive un signal de commande pour la régulation du courant de soudage à partir du signal de sortie de l'appareillage pour la détermination de l'épaisseur de revêtement.

8. Dispositif selon la revendication 7, caractérisé en ce que l'appareillage pour la détermination de l'épaisseur de revêtement comprend une source de rayons gamma et un détecteur de rayons alpha.
